# EUROPÄISCHE PATENTSCHRIFT

(11) **EP 4 255 809 B1**
(45) Veröffentlichungstag und Bekanntmachung des Hinweises auf die Patenterteilung: **31.07.2024**
(21) Anmeldenummer: 22817621.0
(22) Anmeldetag: 11.11.2022
(51) Int. Cl.: B64F 1/36, G06Q 50/26, G01V 5/226, G06Q 10/08

(54) **SICHERHEITSKONTROLLSYSTEM UND SICHERHEITSKONTROLLVERFAHREN**
SECURITY INSPECTION SYSTEM AND SECURITY INSPECTION METHOD
SYSTÈME DE COMMANDE DE SÉCURITÉ ET PROCÉDÉ DE COMMANDE DE SÉCURITÉ

(30) Priorität: 12.11.2021 DE 102021129503
(43) Veröffentlichungstag der Anmeldung: 11.10.2023
(73) Patentinhaber: Hörmann Klatt Conveyors GmbH, 5202 Neumarkt a. Wallersee (AT)
(72) Erfinder: KLATT, Peter, 5202 Neumarkt a. Wallersee (AT)
(74) Vertreter: Tetzner, Michael
(86) Internationale Anmeldenummer: PCT/EP2022/081614
(87) Internationale Veröffentlichungsnummer: WO 2023/084018

(56) Entgegenhaltungen:
- WO-A1-2020/249192
- WO-A1-2021/006808
- US-A- 3 695 462

## Beschreibung

Die Erfindung betrifft ein Sicherheitskontrollsystem und ein Sicherheitskontrollverfahren zur Kontrolle von Gepäck einer Person.

Die Sicherheitskontrolle von Personen, insbesondere Passagieren und deren Handgepäck ist ein fester Bestandteil einer jeden Flugreise. Egal ob innereuropäisch oder international, die Prozeduren und auch das Aussehen der dazugehörigen Anlagen haben sich in den letzten Jahrzehnten nur unwesentlich weiterentwickelt, was nicht zuletzt auch den behördlichen Vorgaben geschuldet ist, wonach die zu verwendenden Gerätschaften sowie die einzuhaltenden Abläufe vorgegeben werden. In den letzten Jahren sind jedoch Neuerungen angedacht und der Einsatz modernerer Technologien, wie beispielsweise der Einsatz von Computertomographen zur Bilderzeugung der Handgepäckskontrolle, stufenweise genehmigt worden.

Aufgrund der steigenden Fluggastzahlen haben die Flughafenbetreiber ein gesteigertes Interesse daran, die Effizienz der Sicherheitskontrolle zu steigern und die Personalkosten durch Automatisierung und Überwachung von Prozessen zur reduzieren.

In der EP 2 684 166 B1 wird für diesen Zweck ein automatisiertes Passagierkontrollsystem vorgeschlagen, bei dem Passagiere ihr Gepäck in einem Gepäckaufgabebereich in einen Ladungsträger aufgeben, wobei eine persönliche Kennung des Passagiers erfasst und mit dem Ladungsträger verknüpft wird. Während das Gepäck eine bildgebende Gepäckkontrolle durchläuft, unterziehen sich die Passagiere einer Personenkontrolle. Anschließend begeben sich die Passagiere in einen Gepäckabholbereich, wo der mit der persönlichen Kennung verknüpfte Ladungsträger zum Entleeren bereitgestellt wird.

Die WO 2020/249192 A1 offenbart ebenfalls ein automatisiertes Sicherheitskontrollsystem, das nach dem Gepäckabholbereich eine Kontrollvorrichtung vorsieht, die dazu ausgebildet ist, den Beladungszustand und den Verschmutzungsgrad eines Ladungsträgers festzustellen.

Aus der WO 2021/006806 A1 ist ein Sicherheitskontrollsystem bekannt, das eine erste und eine zweite Förder- und Scanstrecke zur Kontrolle des Gepäcks aufweist, wobei eine Gepäckverteileinheit das Gepäck an eine der beiden Förder- und Scanstrecken vermittelt und eine Transfereinheit das untersuchte Gepäck vom Ende der zweiten Förder- und Scanstrecke zum Ende der ersten Förder- und Scanstrecke transferiert, von wo aus das Gepäck beider Förder- und Scanstrecken zu den Entnahmeplätzen transportiert wird.

Die US 3 695 462 A offenbart ein Gepäckabfertigungssystem bei dem ein Passagier sein Gepäckstück an einer Entnahmestation aus einem Puffer abrufen kann.

Der Erfindung liegt nun die Aufgabe zugrunde, die Effizienz der Sicherheitskontrolle weiter zu steigern.

Erfindungsgemäß wird diese Aufgabe durch die Merkmale der Ansprüche 1 und 15 gelöst.

Das erfindungsgemäße Sicherheitskontrollsystem besteht im Wesentlichen aus
- einem Gepäckaufgabebereich zur Aufgabe von Gepäck einer Person in wenigstens einen Ladungsträger,
- einer Gepäckkontrollstation zur bildgebenden Untersuchung des Gepäcks,
- einem Gepäckabholbereich mit wenigstens einem Puffer für mehrere mit Gepäck beladene Ladungsträger, wobei jedem Puffer mehrere Entnahmestationen zugeordnet sind und einem Bereitstellungssystem zum Transfer eines mit Gepäck beladenen Ladungsträgers aus dem Puffer zu einer der Entnahmestationen, wobei das Bereitstellungsystem - unabhängig von der Reihenfolge, mit welcher die Ladungsträger in den Puffer eingebracht wurden - zum Transferieren jedes im Puffer befindlichen, mit Gepäck beladenen Ladungsträgers in beliebiger Reihenfolge zu jeder der zugehörigen Entnahmestationen ausgebildet ist und
- einem Transportsystem für den Transport der mit Gepäck beladenen Ladungsträger vom Gepäckaufgabebereich, über die Gepäckkontrollstation zum Gepäckabholbereich und für den Rücktransport von leeren Ladungsträgern zum Gepäckaufgabebereich

Das erfindungsgemäße Sicherheitskontrollverfahren ist durch folgende Verfahrensschritte gekennzeichnet:
- in einem Gepäckaufgabebereich gibt eine Person ihr Gepäck in wenigstens einen Ladungsträger auf,
- das im Ladungsträger befindliche Gepäck wird in einer Gepäckkontrollstation einer bildgebenden Untersuchung unterzogen,
- der Ladungsträger wird mit dem Gepäck zu einem Gepäckabholbereich mit wenigstens einem Puffer für eine Vielzahl von Ladungsträgern transportiert und dort eingebracht, wobei dem Puffer mehrere Entnahmestationen zugeordnet sind,
- der mit Gepäck beladene Ladungsträger wird aus dem Puffer an einer Entnahmestation zur Entleerung bereitgestellt, wobei jeder im Puffer befindliche, mit Gepäck beladene Ladungsträger - unabhängig von der Reihenfolge, mit welcher die Ladungsträger in den Puffer eingebracht wurden - in beliebiger Reihenfolge an jede der zugehörigen Entnahmestationen transferierbar ist und
- die entleerten Ladungsträger werden zum Gepäckaufgabebereich zurücktransportiert werden,

Bei herkömmlichen Systemen wird die Reihenfolge, in der Personen/Passagiere zum Gepäckabholbereich kommen durch die Reihenfolge bestimmt, mit der die Personen durch die Personenkontrolle kommen. Dabei kommt es aber immer wieder vor, dass sich einzelne Personen einer manuellen Personenkontrolle unterziehen müssen, wobei erst nach Abschluss der manuellen Nachkontrolle die nächste Person kontrolliert werden kann. Außerdem werden die Ladungsträger mit dem darin befindlichen Gepäck in der Reihenfolge im Gepäckabholbereich bereitgestellt, mit der sie durch die Gepäckkontrollstation gelaufen sind. Bei den bisherigen Systemen ist es daher kaum möglich, Personen zu überholen, die sich einer längeren Personenkontrolle unterziehen müssen.

Erfindungsgemäß werden die mit Gepäck beladenen Ladungsträger im Gepäckabholbereich daher zunächst einem Puffer zugeführt. Die Personen/Passagiere können sich dann an eine beliebige Entnahmestation begeben und bekommen dann den Ladungsträger mit ihrem Gepäck aus dem Puffer an diese Entnahmestation bereitgestellt.

Bei einer großen Anzahl an Entnahmestationen könnten diese auch in zwei oder mehrere Zonen unterteilt werden, denen jeweils ein Puffer zugeordnet ist. Die Personen erhalten dann auf dem Weg zwischen der Personenkontrolle und dem Gepäckabholbereich die Information, in welche Zone sie sich begeben müssen. Aber auch in der zugeordneten Zone können sie dann eine beliebige, freie Entnahmestation auswählen und das Bereitstellungssystem stellt den zugehörigen Ladungsträger bereit.

Das erfindungsgemäße System ermöglicht somit das Überholen von Personen, die sich beispielsweise einer zusätzlichen, manuellen Personenkontrolle unterziehen müssen oder einfach sich nur langsamer zum Gepäckabholbereich begeben.

Gegenüber dem herkömmlichen, derzeit am Markt befindlichen System, bei dem in einem Staubereich alle ankommenden Ladungsträger in einer Reihe bereitgestellt werden, hat das erfindungsgemäße System auch den Vorteil, dass man sein Gepäck ungestört entnehmen kann und auch nicht Angst haben muss, dass womöglich einzelne Gepäckstücke entwendet werden.

Damit das Prinzip der freien Wahl der Entnahmestation zufriedenstellend funktioniert, und die Bereitstellung des Ladungsträgers mit dem zugehörigen Gepäck in möglichst kurzer Zeit erfolgt, ist der Puffer und das Bereitstellungssystem so ausgebildet, dass jeder im Puffer befindliche Ladungsträger - und zwar unabhängig von der Reihenfolge, mit welcher der Ladungsträger in den Puffer gelangt ist - in beliebiger Reihenfolge an jede der vorhandenen Entnahmestationen transferiert werden kann, sodass es egal ist, an welche Entnahmestation sich die Person begibt und ihren Ladungsträger angefordert.

Weitere Ausgestaltungen der Erfindung sind Gegenstand der Unteransprüche.

Bei den der Erfindung zugrundeliegenden Versuchen hat es sich als vorteilhaft herausgestellt, wenn der Puffer eine Vielzahl von Pufferplätzen aufweist, die in einer Ebene angeordnet sind, wobei der Puffer insbesondere mehrere parallele Pufferreihen mit jeweils mehreren Pufferplätzen aufweisen kann.

Gemäß einer weiteren Ausgestaltung der Erfindung weist das Bereitstellungssystem wenigstens eine Fördereinheit zum Verschieben der Ladungsträger in x-Richtung und wenigstens eine Transfereinheit zum Verschieben der Ladungsträger in x- und y-Richtung auf, wobei die Transfereinheit zwischen dem Puffer und den Entnahmestationen vorgesehen ist und zum Transfer der aus dem Puffer der Transfereinheit zugeführten Ladungsträger an jede der Entnahmestationen ausgelegt ist. Der Transfer eines angeforderten Ladungsträgers zur Entnahmestation erfolgt vorzugsweise ebenfalls in einer Ebene, wodurch ein besonders schneller Transfer gewährleistet werden kann.

In einer weiteren Ausgestaltung der Erfindung weist das Bereitstellungssystem wenigstens ein Hubwerk zum Anheben einzelner oder mehrerer Ladungsträger in z-Richtung auf, wobei das Hubwerk zum Anheben einzelner oder mehrerer Ladungsträger innerhalb einer Pufferreihe in eine angehobene Stellung ausgebildet ist, wobei der beim Anheben entstehende lichte Abstand zum Passieren anderer Ladungsträger unterhalb des in der angehobenen Stellung befindlichen Ladungsträgers ausreicht. Auf diese Weise können Ladungsträger, die erst später in den Puffer eingebracht wurden, andere, früher eingebrachte Ladungsträger überholen, wenn diese vorher an einer der Entnahmestationen angefordert werden sollten. Prinzipiell wäre anstelle eines Anhebens natürlich auch ein Absenken eines Ladungsträgers denkbar, um das Passieren der dahinter befindlichen Ladungsträger zu ermöglichen.

Der Puffer weist vorzugsweise wenigstens doppelt, vorzugweise wenigstens dreimal so viele Pufferplätze als Entnahmestationen auf, wobei man letztendlich die Anzahl an Pufferplätzen und Entnahmestationen am tatsächlichen Bedarf und am vorhandenen Platz orientieren wird.

Weiterhin kann jeder Pufferplatz mit einer separat ansteuerbaren Fördereinheit zum Verschieben der Ladungsträger in x-Richtung ausgebildet sein. Außerdem kann jede Entnahmestation eine Verschiebeeinheit zum Verschieben der Ladungsträger zwischen Entnahmestation und Transfereinheit aufweisen. So können die Ladungsträger in x-Richtung aus dem Puffer auf die Transfereinheit gefördert und von dort entweder weiter in x-Richtung in die nächste Entnahmestation oder zunächst in y-Richtung bis vor die anfordernde Entnahmestation und dann in x-Richtung in diese Entnahmestation.

Für einen besonders schnellen Transfer der Ladungsträger aus dem Puffer zu den Entnahmestationen haben sich insbesondere Riemen- und Rollenförderer oder eine Kombination aus beiden Förderarten als vorteilhaft erwiesen.

Da meist nur ein begrenzter Platz für den Transport der mit Gepäck beladenen Ladungsträger und den rückzuführenden, leeren Ladungsträgern zur Verfügung steht, macht es Sinn, wenn der Rücktransport der leeren Ladungsträger zumindest teilweise in einer zweiten Ebene erfolgt, wobei diese zweite Ebene sowohl oberhalb als auch unterhalb der Transportstrecke für die beladenen Ladungsträger liegen könnte. In einer Ausgestaltung der Erfindung wirkt die Transfereinheit mit wenigstens einem Leerkisten-Hubwerk zusammen, das zum Transfer von aus den Entnahmestationen zur Transfereinheit verschobenen, entleerten Ladungsträgern ausgelegt ist, wobei das Leerkisten-Hubwerk mit einer Rücktransportstrecke zum Rücktransport von leeren Ladungsträgern zum Gepäckaufgabebereich in Verbindung steht. Im Rahmen der Erfindung wäre es aber auch denkbar, dass die entleerten Ladungsträger bereits in der Entnahmestation, beispielsweise nach unten abgesenkt und der Rücktransportstrecke übergeben werden. Dadurch könnte die Transfereinheit bereits parallel für den Transfer des nächsten Ladungsträgers genutzt werden.

Gemäß der bevorzugten Ausführungsform der Erfindung ist in jeder Abgabestation eine erste Identifikationseinrichtung zur Erfassung einer persönlichen Kennung, insbesondere biometrischer Merkmale, der Person vorgesehen, die mit einer Datenverarbeitungseinrichtung zur Verknüpfung der persönlichen Kennung der Person mit dem Ladungsträger, in dem sich das Gepäck der Person befindet, zusammenwirkt. An jeder Abgabestation kann somit eine persönliche Kennung der Person mittels der ersten Identifikationseinrichtung erfasst werden, wobei die persönliche Kennung der Person mittels der Datenverarbeitungseinrichtung mit dem Ladungsträger, in dem sich das Gepäck der Person befindet, verknüpft wird.

Auf diese Weise erfolgt eine eindeutige Zuordnung des mit dem Gepäck beladenen Ladungsträgers mit der Person, der das Gepäck gehört. Die erste Identifikationseinrichtung kann entweder zur erstmaligen Erfassung der persönlichen Kennung der Person ausgebildet sein oder sie wird zur Identifizierung der Person verwendet, wenn die persönliche Kennung im System bereits hinterlegt ist. So könnte die persönliche Kennung einer Person beispielsweise bereits beim Betreten des Flughafengebäudes oder bei der Abgabe des Großgepäcks erfasst werden. Es ist auch denkbar, dass die Person ihre persönliche Kennung im Vorfeld einer Reise, beispielsweise mit einem Smartphone, selbst erzeugt und an die Fluggesellschaft hochlädt. Neben den biometrischen Merkmalen der Person wären auch andere persönliche Kennungen, wie beispielsweise ein Code auf der Bordkarte denkbar. Biometrische Merkmale haben jedoch den Vorteil, dass sie auf einfache Art und Weise mit einer Kamera erfasst werden können und es somit nicht erforderlich ist, dass die Person die Bordkarte oder einen anderen Token einlesen lässt.

Damit im Gepäckabholbereich der richtige Ladungsträger bereitgestellt wird ist jede Entnahmestation vorzugsweise mit einer zweiten Identifikationseinheit zur Erfassung der persönlichen Kennung der vor der Entnahmestation stehenden Person ausgestattet, wobei die zweite Identifikationseinheit mit dem Bereitstellungssystem verknüpft ist, um den mit der persönlichen Kennung der Person verknüpften Ladungsträger aus dem Puffer an diese Entnahmestation zu transferieren. Weiterhin können an den vorhandenen Entnahmestationen Eingabe- und/oder Ausgabeeinheiten, insbesondere Monitore und Lautsprecher, vorgesehen werden, die zur Bereitstellung von Informationen an die Person und/oder zur Bestätigung des Entleerungsvorgangs des Ladungsträgers durch die Person ausgebildet sind. Über die Eingabe- und/oder Ausgabeeinheiten kann die Person insbesondere darauf aufmerksam gemacht werden, dass sich noch Gepäckstücke/Gegenstände im Ladungsträger befinden. Nach der vollständigen Entnahme kann dann, beispielsweise ein guter Flug gewünscht und/oder das Abfluggate angezeigt werden, sofern diese Information vorhanden ist. Eine weitere Option wäre aber auch die Einspielung von Werbung, wodurch eine zusätzliche Einnahmequelle erschlossen wird.

Weiterhin kann eine Überwachungseinrichtung in jeder Entnahmestation vorgesehen werden, um die an der Entnahmestation stehende Person darauf aufmerksam zu machen, wenn beispielsweise noch nicht alle Gegenstände aus dem Ladungsträger entnommen wurden. Wird der Ladungsträger durch die Überwachungseinrichtung als leer erkannt, kann außerdem der Abtransport des Ladungsträgers automatisiert eingeleitet werden, wodurch vermieden wird, dass die Passagiere nach dem Entnehmen ihrer Gegenstände den Entnahmeprozess manuell beenden müssen.

In einer vorteilhaften Ausgestaltung kann an den vorhandenen Entnahmestationen eine Sensoreinheit, die beispielsweise durch die zweite Identifikationseinheit gebildet wird, vorgesehen werden, die dazu ausgebildet ist, das Vorhandensein einer vor der Entnahmestation befindlichen Person festzustellen und die mit der Überwachungseinheit und dem Bereitstellungssystem derart verknüpft ist, dass der Entleerungsprozess durch Abtransport des entleerten Ladungsträgers abgeschlossen wird, wenn die Sensoreinheit keine Person vor der Entnahmestation erkennt und der Ladungsträger leer ist. Auf diese Weise kann die Entnahmestation schnellstmöglich für die nächste Person zur Verfügung gestellt werden. Natürlich ist es auch vorstellbar, dass die Person nach dem Entleeren des Ladungsträgers an der Entnahmestation den Entleerungsprozess durch eine Eingabe an einer Eingabeeinheit oder durch Schließen eines Deckels bzw. einer Abdeckung abschließt und der Ladungsträger daraufhin abtransportiert wird.

Im Gepäckabholbereich kann außerdem wenigstens ein Wartebereich für Personen vorgesehen werden, die ihr Gepäck abholen wollen, wobei dem Wartebereich alle vorhandenen oder die einer Zone zugeteilten Entnahmestationen zugeordnet sind und im Wartebereich wenigstens eine dritte Identifikationseinrichtung vorgesehen ist, welche zumindest die persönliche Kennung der Person, welche als nächstes zu einer der Entnahmestationen gehen kann, erfasst, und wobei die dritte Identifikationseinrichtung mit dem Bereitstellungssystem zum beschleunigten Transfer des mit der persönlichen Kennung verknüpften Ladungsträgers zusammenwirkt. Es wäre somit möglich, dass ein im hinteren Teil des Puffers aufbewahrter Ladungsträger bereits nach vorne auf die Transfereinheit gefördert wird, sodass der Ladungsträger ggf. dann nur noch quer vor die Entnahmestation transferiert werden muss, an die sich die erfasste Person begibt.

Bei den herkömmlichen Abgabe- und Entnahmestationen findet die Abgabe und das Abholen des Gepäcks im Beisein eines Sicherheitspersonals statt. Mit dem oben beschriebenen System/Verfahren ist es nicht mehr erforderlich, dass an jeder Abgabe- oder Entnahmestation ein Sicherheitspersonal anwesend ist. Es reicht vielfach aus, dass das Sicherheitspersonal jeweils für mehrere Abgabe- oder Entnahmestation zuständig ist. Das erfindungsgemäße System/Verfahren zeichnet sich somit auch durch eine deutliche Personaleinsparung aus, da die Abgabe- und Entnahmestationen mit wenig, bis gar keinem Personal auskommen.

Weitere Ausgestaltungen und Vorteile der Erfindung werden anhand der nachfolgenden Beschreibung und der Zeichnungen näher erläutert.

In der Zeichnung zeigen
- Fig. 1: ein Blockdiagramm des Sicherheitskontrollsystems,
- Fig. 2: eine schematische Ansicht des Gepäckaufgabebereichs mit einer Abgabestation,
- Fig. 3: eine schematische Ansicht des Gepäckabholbereichs mit einer Entnahmestation,
- Fig. 4: eine schematische Aufsicht des Gepäckabholbereichs mit Puffer und Entnahmestationen,
- Fig. 5: eine schematische Seitenansicht des Gepäckabholbereichs gemäß Fig. 4.

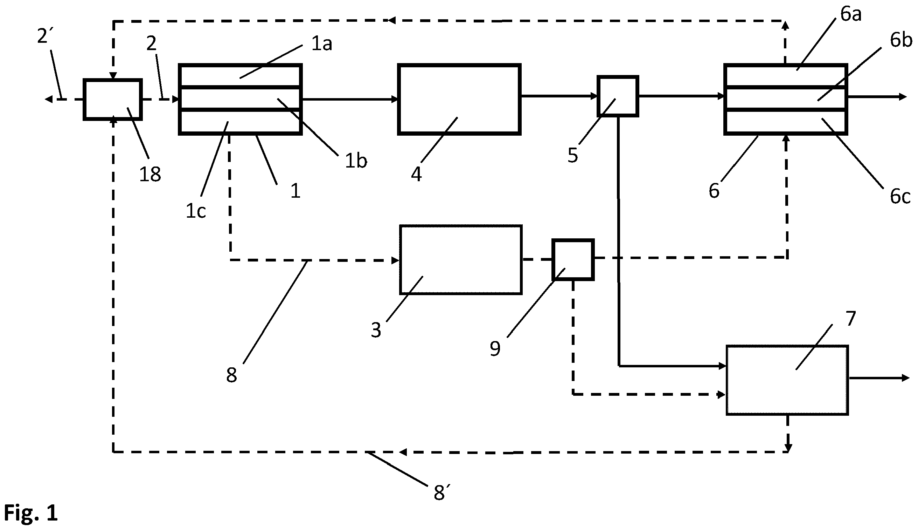

Fig. 1 zeigt ein als Blockdiagramm dargestelltes Ausführungsbeispiel eines erfindungsgemäßen Sicherheitskontrollsystems. Es sieht einen Gepäckaufgabebereich 1 mit ein oder mehreren Abgabestationen 1a, 1b, 1c zur Abgabe von Gepäck in wenigstens einen Ladungsträger 2 vor. Der mit Gepäck beladende Ladungsträger 2 wird einer Gepäckkontrollstation 3 zur bildgebenden Untersuchung des Gepäcks zugeführt, wobei dort vorzugsweise ein Computertomograph zum Einsatz kommt.

Während der Gepäckuntersuchung begibt sich die Person zu einer Personenkontrollstation 4. Hierbei können beispielsweise Metalldetektoren und Bodyscan-Einrichtungen sowie weitere Einrichtungen zum Einsatz kommen.

Die Personenkontrollstation 4 weist vorzugsweise Anstell- und Wegsysteme auf, die eine Synchronisation zwischen Gepäckstatus und Personenkontrolle gezielt steuern können. So wird die Person nach erfolgter Personenkontrolle an einer Informationseinrichtung 5, die mit einer weiteren Identifikationseinheit zur Erfassung der persönlichen Kennung der vor der Informationseinrichtung 5 stehenden Person ausgestattet ist, erfasst und erhält dann die Information, ob sie sich zu einem Gepäckabholbereich 6 mit ein oder mehreren Entnahmestationen 6a, 6b, 6c zum Empfang und Entleeren des der Person zugeordneten Ladungsträgers oder zu einem Nachkontrollbereich 7 zur manuellen Nachkontrolle ihres Gepäcks begeben soll. Die Personenwege sind in Fig. 1 mit durchgezogenen Pfeilen veranschaulicht.

Mit gestrichelten Pfeilen ist ein Transportsystem 8 für den Transport der Ladungsträger 2 vom Gepäckaufgabebereich 1 über die Gepäckkontrollstation 3 zum Gepäckabholbereich 6 bzw. zum Nachkontrollbereich 7 und ein Transportsystem 8' für den Rücktransport von leeren Ladungsträgern zum Gepäckaufgabebereich 1 dargestellt. Nach der Gepäckkontrollstation 3 ist eine Weiche 9 vorgesehen, um das in der Gepäckkontrollstation 3 beanstandete Gepäck zum Nachkontrollbereich 7 abzuzweigen. Bis zur Weiche muss der Bediener der Gepäckkontrollstation (CT-Gerät) seine Entscheidung getroffen haben, ob eine Nachkontrolle erforderlich ist. Sollte keine Entscheidung rechtzeitig getroffen werden, dann wird der Ladungsträger 2 automatisch zum Nachkontrollbereich 7 gefördert, damit es auf der Strecke zum Gepäckabholbereich 6 nicht zu einer Vermischung von beanstandeten und nicht beanstandeten Gepäckstücken kommt.

Im Bereich der Rücktransportstrecke ist eine Einrichtung 18 zur Ausschleusung von nicht komplett entleerten und/oder verschmutzen Ladungsträgern 2' vorgesehen, um zu verhindern, dass derartige Ladungsträger an eine der Abgabestationen gelangen. Derartige Ladungsträger werden dann zu einer Service- oder einer Lost&Found-Station transferiert. Da die Ladungsträger mit der persönlichen Kennung der zugehörigen Person verknüpft sind, kann die zugehörige Personen gezielt ausgerufen und zur Lost&Found-Station gebeten werden.

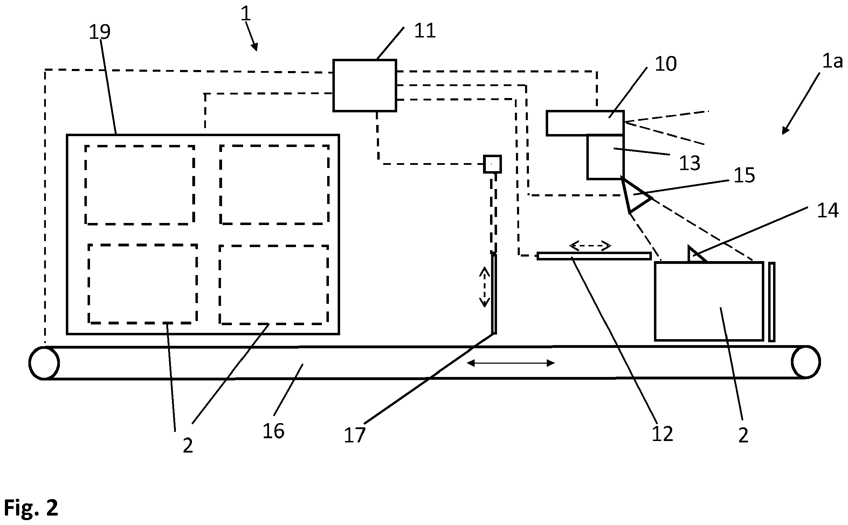

Anhand von Fig. 2 wird nachfolgend der Gepäckaufgabebereich 1 am Beispiel der Abgabestation 1a näher beschrieben. So weist die Abgabestation 1a eine erste Identifikationseinrichtung 10 zur Erfassung einer persönlichen Kennung (insbesondere biometrische Merkmale) der Person auf, die vorzugsweise als Kamera ausgebildet ist. Die persönliche Kennung der Person, wird mittels einer Datenverarbeitungseinrichtung 11 mit dem an der Abgabestation 1a bereitgestellten Ladungsträger 2 verknüpft, in dem eine am Ladungsträger angebrachte Kennzeichnung mit einem nicht näher dargestellten Lesegerät ausgelesen und mit der persönlichen Kennung der Person verknüpft wird. Die Kennzeichnung am Ladungsträger kann beispielsweise durch ein RFID, einen QR-Code oder ein ähnliches Kennzeichen gebildet werden.

Sobald die persönliche Kennung der Person erfasst ist, öffnet sich eine Abdeckung 12, die den Ladungsträger 2 zum Beladen freigibt. Der Ladungsträger 2 ist im dargestellten Ausführungsbeispiel kastenartig und nach oben offen ausgebildet. Die Person kann dann ihr Gepäck im Ladungsträger 2 verstauen, wobei über eine erste Informationseinrichtung 13, die insbesondere einen Monitor und einen Lautsprecher umfasst, visuelle und/oder akustische Hinweis für die Person gegeben werden können. So kann insbesondere darauf hingewiesen werden, dass eine bestimmte maximale Beladungsgrenze nicht überschritten werden darf. Hierzu kann der Ladungsträger eine entsprechende Markierung aufweisen. Es ist aber auch denkbar, dass der Ladungsträger 2 so beladen werden darf, dass das Gepäck 14 nicht über die Ausmaße des Ladungsträgers 2 hinausragt.

Eine erste Überwachungseinrichtung 15, die beispielsweise durch eine Kamera gebildet wird, erkennt den Beladungszustand des Ladungsträgers 2, wobei im Falle eines unerwünschten Beladungszustands über die erste Informationseinrichtung 13 ein entsprechender Hinweis erfolgt. Nachdem das Gepäck 14 im dargestellten Beispiel über die Ausmaße des Ladungsträgers 2 herausragt, könnte die Person dazu aufgefordert werden, das Gepäck richtig einzulegen oder einen zweiten Ladungsträger anzufordern. Des Weiteren besteht die Möglichkeit, Hilfe durch einen Mitarbeiter anzufordern, wenn eine Person nicht zurechtkommt.

Ist das Gepäck ordnungsgemäß im Ladungsträger 2 verstaut, kann der Gepäckabgabeprozess dadurch automatisiert abgeschlossen werden, dass eine Überprüfung, insbesondere nach einer vorgegebenen Zeit, ergibt, dass sich keine Person mehr an der Abgabestation 1a befindet, sodass ein automatisierter Abtransport des Ladungsträgers 2 in Gang gesetzt werden kann. Es könnte aber auch vorgesehen werden, dass die Person den Ladungsträger mit einer Abdeckung oder einem Deckel verschließt. Alternativ könnte der Abschluss auch durch Betätigung einer Taste oder in ähnlicher Art und Weise abgeschlossen werden. Sollte die Person ohne Bestätigung die Entnahmestation verlassen, könnte sie über die erste Informationseinrichtung 13 zur Bestätigung aufgefordert werden. Sollte sich die Person dennoch entfernen, was ggf. durch einen blockierbaren Personenausgang verhindert werden könnte, kann nach Ablauf einer vorgegebenen Zeit auch ein automatischer Abtransport in Gang gesetzt werden.

Für den Abtransport schließt zunächst die Abdeckung 12 und ein ggf. vorhandenes Tor 17 öffnet sich, um den Abtransport des Ladungsträgers 2 freizugeben. Der Transport des Ladungsträgers 2 erfolgt über das Transportsystem 8 und/oder ein mit dem Transportsystem 8 in Verbindung stehendes Bereitstellungssystem 16, wobei die erste Überwachungseinrichtung 15 mit dem Bereitstellungssystem 16 und/oder dem Transportsystem 8 derart gekoppelt ist, dass der Abtransport des Ladungsträger 2 aus der Abgabestation 1a blockiert wird (Abdeckung 12 bleibt offen und Tor 17 bleibt geschlossen), wenn ein unerwünschter Beladungszustand des Ladungsträgers 2 festgestellt wird. Der ordnungsgemäß mit Gepäck beladene Ladungsträger 2 wird dann der Gepäckkontrollstation 3 zugeführt, während sich die Person zu Personenkontrollstation 4 begibt.

Der Abgabestation 1a ist ein Pufferbereich 19 für rückgeführte, leere Ladungsträger 2 zugeordnet, wobei in der Abgabestation 1a der nächste leere Ladungsträger über das Transportsystem 8 oder das Bereitstellungsystem 16 bereitgestellt wird.

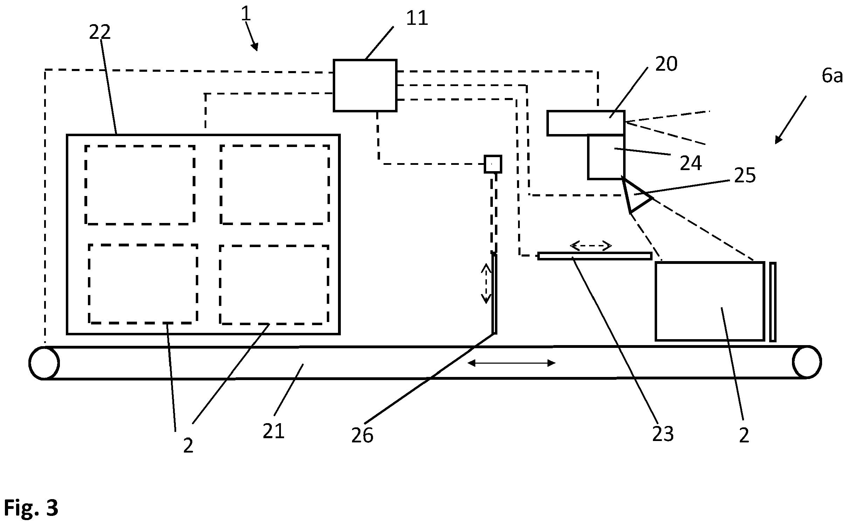

Im Folgenden wird anhand der Fig. 3 der Gepäckabholbereich 6 am Beispiel der Entnahmestation 6a näher erläutert.

Die Entnahmestation 6a kann grundsätzlich ähnlich oder identisch zur Abgabestation 1a aufgebaut werden. So weist die Entnahmestation 6a eine zweite Identifikationseinrichtung 20 zur Erfassung der persönlichen Kennung der vor der Entnahmestation stehenden Person auf, wobei die zweite Identifikationseinheit 20 mit einem zweiten Bereitstellungssystem 21 verknüpft ist, um den mit der persönlichen Kennung der Person verknüpften Ladungsträger 2 an diese Entnahmestation 6a zu transferieren. Der Gepäckabholbereich 6 weist hierzu wenigstens einen Puffer 22 für mehrere mit Gepäck beladene Ladungsträger 2 auf, wobei dem Puffer 22 mehrere der Entnahmestationen, also beispielsweise die Entnahmestationen 6a, 6b und 6c zugeordnet sind. Das zweite Bereitstellungssystem 21 ist zum Transfer der mit Gepäck beladenen Ladungsträger 2 aus dem Puffer 22 zu einer der Entnahmestationen 6a, 6b, 6c ausgebildet, wobei der Puffer 22 - unabhängig von der Reihenfolge, in welcher die Ladungsträger 2 in den Puffer 22 eingebracht worden sind - in der Lage ist, die Ladungsträger 2 in beliebiger Reihenfolge zu jeder der zugeordneten Entnahmestationen 6a, 6b, 6c zu transferieren. Die Person, die ihr Gepäck abholen will, kann sich daher an eine beliebige, freie Entnahmestation 6a, 6b, 6c begeben und wird dort von der zweite Identifikationseinrichtung 20 identifiziert, sodass der mit ihrer persönlichen Kennung verknüpfte Ladungsträger 2 aus dem Puffer 22 an diese Entnahmestation transferiert wird.

Sobald der zugehörige Ladungsträger 2 in der Entnahmestation bereitgestellt ist, öffnet sich eine Abdeckung 23, die den Ladungsträger 2 zum Entladen zugänglich macht. Über eine Eingabe- und/oder Ausgabeeinheit 24 können Informationen an die Person bereitgestellt werden. Eine zweite Überwachungseinrichtung 25, die beispielsweise durch eine Kamera gebildet wird, erkennt den Beladungszustand des Ladungsträgers 2. Über die Eingabe- und/oder Ausgabeeinheit 24 kann die Person, insbesondere darauf aufmerksam gemacht werden, dass sich noch Gepäckstücke/Gegenstände im Ladungsträger 2 befinden. Nach der vollständigen Entnahme kann dann, beispielsweise ein guter Flug gewünscht und/oder das Abfluggate angezeigt werden.

In einer vorteilhaften Ausgestaltung ist an den vorhandenen Entnahmestationen eine Sensoreinheit, die beispielsweise durch die zweite Identifikationseinheit 20 gebildet wird, vorgesehen, die dazu ausgebildet ist, das Vorhandensein einer vor der Entnahmestation befindlichen Person festzustellen, und die mit der zweiten Überwachungseinheit 25 und dem zweiten Bereitstellungssystem 21 derart verknüpft ist, dass der Entleerungsprozess durch Abtransport des entleerten Ladungsträgers 2 abgeschlossen wird, wenn die Sensoreinheit keine Person vor der Entnahmestation 6a erkennt und der Ladungsträger 2 leer ist. Auf diese Weise kann die Entnahmestation schnellstmöglich der nächsten Person zur Verfügung gestellt werden.

Ist der Entnahmeprozess beendet, schließt zunächst die Abdeckung 23 und/oder ein ggf. vorhandenes Tor 26 öffnet sich, um den Abtransport des Ladungsträgers 2 freizugeben. Der Transport des Ladungsträgers 2 erfolgt über das zweite Bereitstellungssystem 21 und/oder das Transportsystem 8, wobei die zweite Überwachungseinrichtung 25 mit dem zweiten Bereitstellungssystem 21 und/oder dem Transportsystem 8 derart gekoppelt ist, dass der Abtransport des Ladungsträgers 2 aus der Entnahmestation 6a blockiert wird (Abdeckung 23 bleibt offen und Tor 26 bleibt geschlossen), wenn sich noch ein Gegenstand im Ladungsträger 2 befinden sollte. Sollte der Ladungsträger 2 leer sein wird der Rücktransport zum Gepäckaufgabebereich 1 eingeleitet. Alsdann kann der nächste Entnahmeprozess eingeleitet werden, indem die nächste, vor der Entnahmestation stehende Person von der zweiten Identifikationseinrichtung 20 erfasst wird.

Gemäß einer bevorzugten Ausgestaltung der Erfindung kann die zweite Überwachungseinrichtung 25 in den Entnahmestationen 6a, 6b, 6c auch in der Lage sein, eine Verschmutzung des Ladungsträgers 2, beispielsweise durch eine ausgelaufene Flüssigkeit, zu erkennen. Verschmutzte Ladungsträger könnten dann an der Einrichtung 18 (Fig. 1) ausgeschleust werden. Eine Ausschleusung könnte auch im Falle eines nicht oder nicht vollständig entleerten Ladungsträgers erfolgen, wenn sich die Person vor der vollständigen Entleerung von der Entnahmestation 6a, 6b, 6c entfernen sollte.

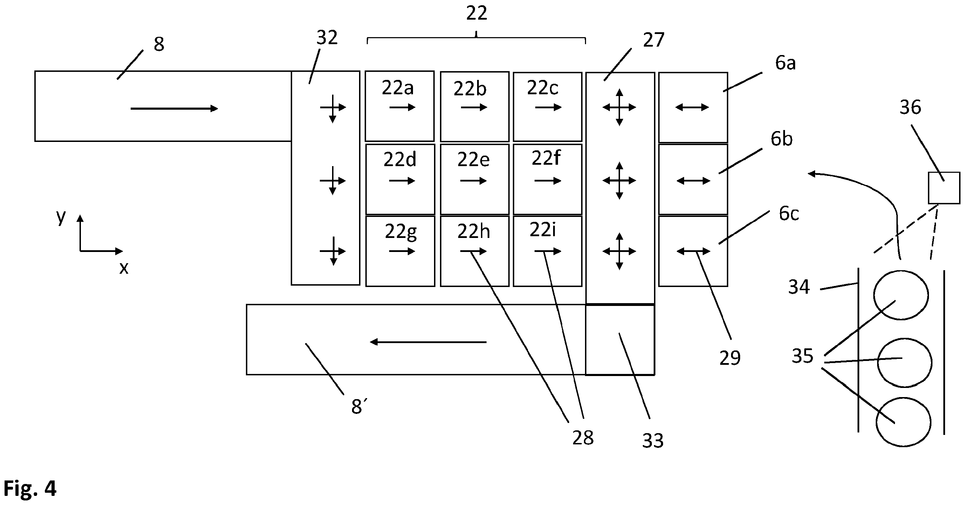

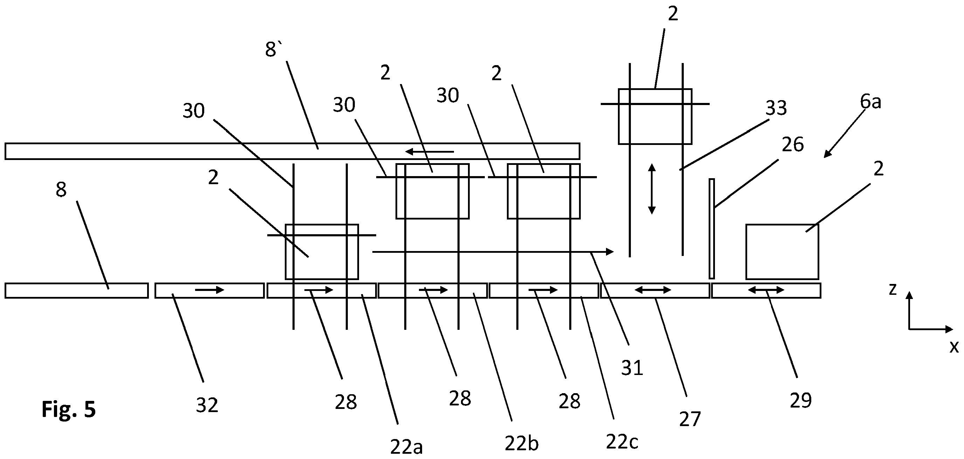

Im Folgenden wird anhand der Fig. 4 und 5 die Bereitstellung der Ladungsträger 2 im Gepäckabholbereich 6 näher erläutert. Der Puffer 22 weist eine Vielzahl von Pufferplätzen 22a - 22i auf, die vorzugsweise in einer Ebene angeordnet sind, wobei der Puffer insbesondere mehrere parallele Pufferreihen mit jeweils mehreren Pufferplätzen 22a - 22c, 22d - 22f und 22g - 22c vorsieht.

Das zweite Bereitstellungssystem 21 weist eine Transfereinheit 27 zum Verschieben der Ladungsträger 2 in x- und y-Richtung auf, wobei die Transfereinheit 27 zwischen dem Puffer 22 und den Entnahmestationen 6a, 6b, 6c vorgesehen ist und zum Transfer der aus dem Puffer 22 der Transfereinheit 27 zugeführten Ladungsträger 2 an jede der Entnahmestationen 6a, 6b, 6c ausgelegt ist. Der Transfer eines angeforderten Ladungsträgers 2 zu einer der Entnahmestation 6a, 6b, 6c erfolgt vorzugsweise in derselben Ebene, wodurch ein besonders schneller Transfer gewährleistet werden kann.

Für den Transport der Ladungsträger 2 innerhalb des Puffers 22 ist jeder Pufferplatz 22a - 22i mit einer separat ansteuerbaren Fördereinheit 28 (schematisch als Pfeil dargestellt) zum Verschieben der Ladungsträger 2 in x-Richtung ausgebildet. Weiterhin ist in jeder Entnahmestation 6a, 6b, 6c eine Verschiebeeinheit 29 zum Verschieben der Ladungsträger 2 zwischen Entnahmestation 6a, 6b, 6c und Transfereinheit 27 vorgesehen. Auf diese Weise können die Ladungsträger 2 in x-Richtung aus dem Puffer 22 auf die Transfereinheit 27 gefördert und von dort entweder weiter in x-Richtung in die nächste Entnahmestation 6a, 6b, 6c oder zunächst in y-Richtung bis vor die anfordernde Entnahmestation 6a, 6b, 6c und dann in x-Richtung in diese Entnahmestation 6a, 6b, 6c transferiert werden. Die separat ansteuerbaren Fördereinheiten 28, die Transfereinheit 27 und die Verschiebeeinheiten 29 stellen zusammen das zweite Bereitstellungssystem 21 dar und sind insbesondere als Riemen- oder Rollenförderer oder als Kombination aus beiden Förderarten ausgebildet.

Im Puffer können die Ladungsträger 2 im dargestellten Ausführungsbeispiel nur innerhalb einer Reihe, die beispielsweise durch die Pufferplätze 22a, 22b und 22c gebildet wird, gefördert werden. Wird jedoch beispielhaft an der Entnahmestation 6a ein Ladungsträger 2 angefordert, der sich auf dem Pufferplatz 22a befindet, ist die Förderstrecke möglicherweise durch Ladungsträger 2 blockiert, die sich auf den Pufferplätzen 22b und/oder 22c befinden. Um dennoch eine schnellstmögliche Bereitstellung des Ladungsträgers vom Pufferplatz 22a zu ermöglichen, sieht das zweite Bereitstellungssystem 21 an den einzelnen Pufferplätzen 22a - 22i Hubwerke 30 zum Anheben der zugeordneten Ladungsträger 2 in z-Richtung vor, wobei die Hubwerke 30 die Ladungsträger 2 innerhalb einer Pufferreihe in eine angehobene Stellung bringen (siehe Fig. 5), wobei der beim Anheben entstehende lichte Abstand zum Passieren anderer Ladungsträger 2, hier des Ladungsträgers auf dem Pufferplatz 22a unterhalb der in der angehobenen Stellung befindlichen Ladungsträger ausreicht (Pfeil 31). Auf diese Weise können Ladungsträger 2, die erst später in den Puffer 22 eingebracht wurden, andere, früher eingebrachte Ladungsträger überholen, wenn diese vorher an einer der Entnahmestationen angefordert werden sollten. Prinzipiell wäre anstelle eines Anhebens natürlich auch ein Absenken eines Ladungsträgers denkbar, um das Passieren der dahinter befindlichen Ladungsträger zu ermöglichen. Prinzipiell ist es nicht erforderlich, dass die hintern Pufferplätze 22a, 22d und 22g mit einem Hubwerk ausgestattet sind. Ist dies jedoch der Fall könnte sogar ein Ladungsträger 2 zu einer der Entnahmestationen 6a, 6b, 6c transferiert werden, der gerade vom Transportsystem 8 zum Puffer 22 transportiert wird. Zur Einbringung von Ladungsträgern 2 in den Puffer 22 ist ferner eine Verteileinrichtung 32 vorgesehen, die zwischen dem Transportsystem 8 und dem Puffer 22 angeordnet ist. Die Verteileinrichtung 32 ist ähnlich wie die Transfereinheit 27 zum Verschieben der Ladungsträger 2 in x- und y-Richtung ausgebildet und ermöglicht so die Einbringung des nächsten Ladungsträger 2 in jede der in x-Richtung verlaufenden Pufferreihen.

Da meist nur ein begrenzter Platz für den Transport der mit Gepäck beladenen und den rückzuführenden, leeren Ladungsträgern zur Verfügung steht, macht es Sinn, wenn das Transportsystem 8'für den Rücktransport der leeren Ladungsträger 2 zumindest teilweise in einer zweiten Ebene angeordnet wird. Im dargestellten Ausführungsbeispiel (Fig. 5) weist die Transfereinheit 27 wenigstens ein Leerkisten-Hubwerk 33 auf, welches zum Transfer von aus den Entnahmestationen 6a, 6b, 6c zur Transfereinheit 27 verschobenen, entleerten Ladungsträger 2 ausgelegt ist. Das Leerkisten-Hubwerk 33 steht mit dem Transportsystem 8' für den Rücktransport der leeren Ladungsträger 2 zum Gepäckaufgabebereich 1 in Verbindung.

Im Gepäckabholbereich 6 kann außerdem wenigstens ein Wartebereich 34 (Fig. 4) für Personen 35 vorgesehen werden, die ihr Gepäck abholen wollen, wobei dem Wartebereich 34 alle vorhandenen oder die einer Zone zugeteilten Entnahmestationen, hier 6a, 6b, 6c, zugeordnet sind und im Wartebereich 34 wenigstens eine dritte Identifikationseinrichtung 36 vorgesehen ist, welche die persönliche Kennung zumindest der Person, die als nächstes zu einer der Entnahmestationen 6a, 6b, 6c gehen kann, erfasst, und wobei die dritte Identifikationseinrichtung 36 mit dem zweiten Bereitstellungssystem 21 zum beschleunigten Transfer des mit der persönlichen Kennung verknüpften Ladungsträgers 2 zusammenwirkt. So könnte der verknüpfte Ladungsträger 2 bereits nach vorne auf die Transfereinheit 27 gefördert werden, während sich die Person noch im Wartebereich befindet oder sich gerade zu einer freien Entnahmestation begibt. Der Ladungsträger 2 kann dann besonders schnell an die Entnahmestation 6a, 6b, 6c transferiert werden, an die sich diese Person dann tatsächlich wendet.

## Patentansprüche

1. Sicherheitskontrollsystem mit
- einem Gepäckaufgabebereich (1) zur Aufgabe von Gepäck einer Person in wenigstens einen Ladungsträger (2),
- einer Gepäckkontrollstation (3) zur bildgebenden Untersuchung des Gepäcks,
- einem Gepäckabholbereich (6) mit wenigstens einem Puffer (22) für mehrere mit Gepäck beladene Ladungsträger (2), wobei jedem Puffer (22) mehrere Entnahmestationen (6a, 6b, 6c) zugeordnet sind und einem Bereitstellungssystem (21) zum Transfer eines mit Gepäck beladenen Ladungsträgers (2) aus dem Puffer (22) zu einer der Entnahmestationen (6a, 6b, 6c) und
- einem Transportsystem (8, 8') für den Transport der mit Gepäck beladenen Ladungsträger vom Gepäckaufgabebereich, über die Gepäckkontrollstation zum Gepäckabholbereich und für den Rücktransport von leeren Ladungsträgern zum Gepäckaufgabebereich,
**dadurch gekennzeichnet, dass** das Bereitstellungsystem (21) - unabhängig von der Reihenfolge, mit welcher die Ladungsträger (2) in den Puffer (22) eingebracht wurden - zum Transferieren jedes im Puffer (22) befindlichen, mit Gepäck beladenen Ladungsträgers (2) in beliebiger Reihenfolge zu jeder der zugehörigen Entnahmestationen (6a, 6b, 6c) ausgebildet ist.

2. Sicherheitskontrollsystem nach Anspruch 1, **dadurch gekennzeichnet, dass** der Puffer (22) eine Vielzahl von Pufferplätzen (22a -22i) aufweist, die in einer Ebene angeordnet sind.

3. Sicherheitskontrollsystem nach Anspruch 1, **dadurch gekennzeichnet, dass** der Puffer (22) mehrere parallele Pufferreihen mit jeweils mehreren Pufferplätzen (22a - 22b, 22d - 22f, 22g - 22i) aufweist.

4. Sicherheitskontrollsystem nach Anspruch 1, **dadurch gekennzeichnet, dass** das Bereitstellungssystem (21) wenigstens eine Fördereinheit (28) zum Verschieben der Ladungsträger (2) in x-Richtung und wenigstens eine Transfereinheit (27) zum Verschieben der Ladungsträger (2) in x- und y-Richtung aufweist, wobei die Transfereinheit (27) zwischen dem Puffer (22) und den Entnahmestationen (6a, 6b, 6c) vorgesehen ist und zum Transfer der aus dem Puffer (22) der Transfereinheit (27) zugeführten Ladungsträger (2) an jede der Entnahmestationen (6a, 6b, 6c) ausgelegt ist.

5. Sicherheitskontrollsystem nach Anspruch 3, **dadurch gekennzeichnet, dass** das Bereitstellungssystem (21) wenigstens ein Hubwerk (30) zum Anheben einzelner oder mehrerer Ladungsträger (2) in z-Richtung aufweist, wobei das Hubwerk (30) zum Anheben einzelner oder mehrerer Ladungsträger (2) innerhalb einer Pufferreihe in eine angehobene Stellung ausgebildet ist, wobei der beim Anheben entstehende lichte Abstand zum Passieren anderer Ladungsträger (2) unterhalb des in der angehobenen Stellung befindlichen Ladungsträgers (2) ausreicht.

6. Sicherheitskontrollsystem nach Anspruch 3, **dadurch gekennzeichnet, dass** der Puffer (22) eine Vielzahl von Pufferplätzen (22a -22i) aufweist und dem Puffer (22) eine Vielzahl von Entnahmestationen (6a, 6b, 6c) zugeordnet ist, wobei wenigstens doppelt so viele Pufferplätze als Entnahmestationen (6a, 6b, 6c) vorgesehen sind.

7. Sicherheitskontrollsystem nach Anspruch 1, **dadurch gekennzeichnet, dass** der Puffer (22) eine Vielzahl von Pufferplätzen (22a - 22i) aufweist, wobei jeder Pufferplatz (22a - 22i) mit einer separat ansteuerbaren Fördereinheit (28) zum Verschieben der Ladungsträger (2) in x-Richtung ausgebildet ist.

8. Sicherheitskontrollsystem nach Anspruch 4, **dadurch gekennzeichnet, dass** jede Entnahmestation (6a, 6b, 6c) eine Verschiebeeinheit (29) zum Verschieben der Ladungsträger (2) zwischen Entnahmestation (6a, 6b, 6c) und Transfereinheit (27) aufweist.

9. Sicherheitskontrollsystem nach Anspruch 1, **dadurch gekennzeichnet, dass** im Gepäckaufgabebereich (1) eine erste Identifikationseinrichtung (10) zur Erfassung einer persönlichen Kennung der Person vorgesehen ist, die mit einer Datenverarbeitungseinrichtung (11) zur Verknüpfung der persönlichen Kennung der Person mit dem Ladungsträger (2), in dem sich das Gepäck der Person befindet, zusammenwirkt.

10. Sicherheitskontrollsystem nach Anspruch 9, **dadurch gekennzeichnet, dass** jede Entnahmestation (6a, 6b, 6c) mit einer zweiten Identifikationseinrichtung (20) zur Erfassung der persönlichen Kennung der vor der Entnahmestation (6a, 6b, 6c) stehenden Person ausgestattet ist, wobei die zweite Identifikationseinheit (20) mit dem Bereitstellungssystem (21) verknüpft ist, um den mit der persönlichen Kennung der Person verknüpften Ladungsträger (2) an diese Entnahmestation (6a, 6b, 6c) zu transferieren.

11. Sicherheitskontrollsystem nach Anspruch 10, **dadurch gekennzeichnet, dass** der Gepäckabholbereich (6) wenigstens einen Wartebereich (34) für Personen aufweist, die ihr Gepäck abholen wollen, wobei dem Wartebereich (34) die mehreren Entnahmestationen (6a, 6b, 6c) zugeordnet sind und im Wartebereich (34) wenigstens eine dritte Identifikationseinrichtung (36) vorgesehen ist, welche zumindest die persönliche Kennung der Person, welche als nächstes zu einer der Entnahmestationen (6a, 6b, 6c) gehen kann, erfasst, und wobei die dritte Identifikationseinrichtung (36) mit dem Bereitstellungssystem (21) zum beschleunigten Transfer des mit der persönlichen Kennung verknüpften Ladungsträgers (2) zusammenwirkt.

12. Sicherheitskontrollsystem nach Anspruch 9, **dadurch gekennzeichnet, dass**
- zwischen dem Gepäckaufgabebereich (1) und dem Gepäckabholbereich (6) eine Personenkontrollstation (4) vorgesehen ist,
- der Gepäckabholbereich (6) für in der Gepäckkontrollstation (3) nicht beanstandetes Gepäck ausgelegt ist,
- ein Nachkontrollbereich (7) für in der Gepäckkontrollstation (3) beanstandetes Gepäck vorgesehen ist und
- nach der Personenkontrollstation eine Informationseinrichtung (5) mit einer weiteren Identifikationseinrichtung zur Erfassung der persönlichen Kennung einer vor der Informationseinheit (5) stehenden Person vorgesehen ist, wobei die Informationseinheit (5) weiterhin zur Bereitstellung eines Hinweises ausgebildet ist, wobei der Hinweis angibt, ob das Gepäck im Gepäckabholbereich (6) oder im Nachkontrollbereich (7) bereitgestellt wird.

13. Sicherheitskontrollverfahren, **dadurch gekennzeichnet, dass** ein Sicherheitskontrollsystem nach Anspruch 1 zum Einsatz kommt, wobei
- in einem Gepäckaufgabebereich (1) eine Person ihr Gepäck in wenigstens einen Ladungsträger (2) aufgibt,
- das im Ladungsträger (2) befindliche Gepäck in einer Gepäckkontrollstation (3) einer bildgebenden Untersuchung unterzogen wird,
- der Ladungsträger (2) mit dem Gepäck zu einem Gepäckabholbereich (6) mit wenigstens einem Puffer (22) für eine Vielzahl von Ladungsträgern (2) transportiert und dort eingebracht wird, wobei dem Puffer (22) mehrere Entnahmestationen (6a, 6b, 6c) zugeordnet sind,
- der mit Gepäck beladene Ladungsträger (2) aus dem Puffer (22) an einer Entnahmestation (6a, 6b, 6c) zur Entleerung bereitgestellt wird und
- die entleerten Ladungsträger (2) zum Gepäckaufgabebereich (1) zurücktransportiert werden,
**dadurch gekennzeichnet, dass** - unabhängig von der Reihenfolge, mit welcher die Ladungsträger (2) in den Puffer (22) eingebracht wurden - jeder im Puffer (22) befindliche, mit Gepäck beladene Ladungsträger (2) in beliebiger Reihenfolge an jede der zugehörigen Entnahmestationen (6a, 6b, 6c) transferierbar ist.

14. Sicherheitskontrollverfahren nach Anspruch 12, **dadurch gekennzeichnet, dass** im Gepäckaufgabebereich (1) eine persönliche Kennung der Person mittels einer ersten Identifikationseinrichtung (10) erfasst und mit dem Ladungsträger (2), in dem sich das Gepäck der Person befindet, verknüpft wird.

15. Sicherheitskontrollverfahren nach Anspruch 13, **dadurch gekennzeichnet, dass** die persönliche Kennung der Person, die vor einer der Entnahmestationen (6a, 6b, 6c) steht, mittels einer zweiten Identifikationseinrichtung (20) erfasst wird und der mit der persönlichen Kennung der Person verknüpfte Ladungsträger (2) aus dem Puffer (22) an diese Entnahmestation (6a, 6b, 6c) transferiert wird.

## Claims

1. A security inspection system having
- a luggage loading region (1) for loading luggage of a person into at least one load carrier (2),
- a luggage inspection station (3) for an imaging examination of the luggage,
- a luggage retrieval region (6) with at least one buffer (22) for multiple load carriers (2) loaded with luggage, wherein each buffer (22) is paired with a plurality of removal stations (6a, 6b, 6c) and a providing system (21) for transferring a load carrier (2) loaded with luggage from the buffer (22) to one of the removal stations (6a, 6b, 6c), and
- a transport system (8, 8') for transporting the load carriers loaded with luggage from the luggage loading region to the luggage retrieval region via the luggage inspection station and for transporting back empty load carriers to the luggage loading region,
**characterized in that** the providing system (21) - regardless of the order in which the load carriers (2) have been introduced into the buffer (22) - is designed to transfer each load carrier (2) loaded with luggage located in the buffer (22) in any order to each of the corresponding removal stations (6a, 6b, 6c).

2. The security inspection system according to claim 1, **characterized in that** the buffer (22) has a plurality of buffer spaces (22a-22i) arranged in a plane.

3. The security inspection system according to claim 1, **characterized in that** the buffer (22) has a plurality of parallel rows of buffers, each having a plurality of buffer spaces (22a-22b, 22d-22f, 22g-22i).

4. The security inspection system according to claim 1, **characterized in that** the providing system (21) has at least one conveyor unit (28) for displacing the load carriers (2) in the x-direction and at least one transfer unit (27) for displacing the load carriers (2) in the x- and y-directions, wherein the transfer unit (27) is provided between the buffer (22) and the removal stations (6a, 6b, 6c) and is designed to transfer the load carriers (2) fed from the buffer (22) to the transfer unit (27) to each of the removal stations (6a, 6b, 6c).

5. The security inspection system according to claim 3, **characterized in that** the providing system (21) has at least one lifting mechanism (30) for lifting one or more load carriers (2) in the z-direction, wherein the lifting mechanism (30) is designed to lift one or more load carriers (2) within a row of buffers into a raised position, wherein the clearance created during lifting is sufficient for passing other load carriers (2) below the load carrier (2) in the raised position.

6. The security inspection system according to claim 3, **characterized in that** the buffer (22) has a plurality of buffer spaces (22a-22i) and a plurality of removal stations (6a, 6b, 6c) are paired with the buffer (22), wherein at least twice as many buffer spaces are provided as removal stations (6a, 6b, 6c).

7. The security inspection system according to claim 1, **characterized in that** the buffer (22) has a plurality of buffer spaces (22a-22i), wherein each buffer space (22a-22i) is designed with a separately controllable conveyor unit (28) for displacing the load carriers (2) in the x-direction.

8. The security inspection system according to claim 4, **characterized in that** each removal station (6a, 6b, 6c) has a displacement unit (29) for displacing the load carriers (2) between the removal station (6a, 6b, 6c) and the transfer unit (27).

9. The security inspection system according to claim 1, **characterized in that** a first identification device (10) for detecting a personal identifier of the person is provided in the luggage loading region (1), which identification device interacts with a data processing device (11) for linking the personal identifier of the person with the load carrier (2) in which the person's luggage is located.

10. The security inspection system according to claim 9, **characterized in that** each removal station (6a, 6b, 6c) is equipped with a second identification device (20) for detecting the personal identifier of the person standing in front of the removal station (6a, 6b, 6c), wherein the second identification unit (20) is linked to the providing system (21) in order to transfer the load carrier (2) linked to the personal identifier of the person to this removal station (6a, 6b, 6c).

11. The security inspection system according to claim 10, **characterized in that** the luggage retrieval region (6) has at least one waiting area (34) for people who wish to collect their luggage, wherein the waiting area (34) is paired with the plurality of removal stations (6a, 6b, 6c) and at least one third identification device (36) is provided in the waiting area (34), which detects at least the personal identifier of the person who can go to one of the removal stations (6a, 6b, 6c) next, and wherein the third identification device (36) interacts with the providing system (21) for the accelerated transfer of the load carrier (2) linked to the personal identifier.

12. The security inspection system according to claim 9, **characterized in that**
- a people screening station (4) is provided between the luggage loading region (1) and the luggage retrieval region (6),
- the luggage retrieval region (6) is designed for luggage not rejected in the luggage inspection station (3),
- a follow-up inspection region (7) is provided for luggage rejected at the luggage inspection station (3), and
- after the people screening station, an information device (5) having a further identification device for detecting the personal identifier of a person standing in front of the information unit (5) is provided, wherein the information unit (5) is further designed to provide an indication, wherein the indication indicates whether the luggage is provided in the luggage retrieval region (6) or in the follow-up inspection region (7).

13. A security inspection method, **characterized in that** a security inspection system according to claim 1 is used, wherein
- in a luggage loading region (1), a person places their luggage in at least one load carrier (2),
- the luggage in the load carrier (2) is subjected to an imaging examination in a luggage inspection station (3),
- the load carrier (2) is transported with the luggage to a luggage retrieval region (6) having at least one buffer (22) for a plurality of load carriers (2) and introduced there, wherein the buffer (22) is paired with a plurality of removal stations (6a, 6b, 6c),
- the load carrier (2) loaded with luggage is made available for emptying from the buffer (22) at a removal station (6a, 6b, 6c), and
- the emptied load carriers (2) are transported back to the luggage loading region (1),
**characterized in that** - regardless of the order in which the load carriers (2) have been introduced into the buffer (22) - each load carrier (2) loaded with luggage located in the buffer (22) can be transferred in any order to each of the corresponding removal stations (6a, 6b, 6c).

14. The security inspection method according to claim 13, **characterized in that**, in the luggage loading region (1), a personal identifier of the person is detected by means of a first identification device (10) and is linked to the load carrier (2) in which the person's luggage is located.

15. The security inspection method according to claim 13, **characterized in that** the personal identifier of the person standing in front of one of the removal stations (6a, 6b, 6c) is detected by means of a second identification device (20) and the load carrier (2) linked to the personal identifier of the person is transferred from the buffer (22) to this removal station (6a, 6b, 6c).

## Revendications

1. Système de contrôle de sécurité comprenant :
- une zone d'enregistrement des bagages (1), qui sert à l'enregistrement des bagages d'une personne dans au moins un support de charge (2),
- une station de contrôle des bagages (3) pour l'examen par imagerie des bagages,
- une zone de récupération des bagages(6), qui comprend au moins un tampon (22) pour plusieurs supports de charge (2) chargés de bagages, où plusieurs stations d'enlèvement (6a, 6b, 6c) sont affectées à chaque tampon (22), et ladite zone de récupération des bagages comprend un système de mise à disposition (21) servant au transfert d'un support de charge (2) chargé de bagages, ledit transfert étant effectué depuis le tampon (22) jusqu'à l'une des stations d'enlèvement (6a, 6b, 6c) et
- un système de transport (8, 8') conçu pour le transport des supports de charge chargés de bagages, ledit transport étant effectué à partir de la zone d'enregistrement des bagages jusqu'à la zone de récupération des bagages en passant par la station de contrôle des bagages, et conçu pour le transport de retour de supports de charge vides jusqu'à la zone d'enregistrement des bagages,
**caractérisé en ce que** le système de mise à disposition (21) - indépendamment de l'ordre dans lequel les supports de charge (2) ont été introduits dans le tampon (22) - est conçu pour le transfert, dans n'importe quel ordre, de chaque support de charge (2) chargé de bagages, qui se trouve dans le tampon (22), jusqu'à chacune des stations d'enlèvement associées (6a, 6b, 6c).

2. Système de contrôle de sécurité selon la revendication 1, **caractérisé en ce que** le tampon (22) présente une multiplicité d'espaces tampons (22a - 22i) qui sont disposés dans un plan.

3. système de contrôle de sécurité selon la revendication 1, **caractérisé en ce que** le tampon (22) présente plusieurs rangées de tampons parallèles, qui comprennent à chaque fois plusieurs espaces tampons (22a - 22b, 22d - 22f, 22g - 22i).

4. Système de contrôle de sécurité selon la revendication 1, **caractérisé en ce que** le système de mise à disposition (21) présente au moins une unité de convoyeur (28) servant au déplacement des supports de charge (2) dans la direction x et présente au moins une unité de transfert (27) servant au déplacement des supports de charge (2) dans les directions x et y, où l'unité de transfert (27) est prévue entre le tampon (22) et les stations d'enlèvement (6a, 6b, 6c) et est conçue pour le transfert des supports de charge (2) fournis à l'unité de transfert (27), ledit transfert étant effectué à partir du tampon (22) jusqu'à chacune des stations d'enlèvement (6a, 6b, 6c).

5. système de contrôle de sécurité selon la revendication 3, **caractérisé en ce que** le système de mise à disposition (21) présente au moins un mécanisme de levage (30) servant à soulever, dans la direction z, des supports de charge (2) individuels ou multiples, où le mécanisme de levage (30) servant à soulever des supports de charge (2) individuels ou multiples est configuré dans une position relevée à l'intérieur d'une rangée de tampons, où la distance libre créée lors du levage suffit pour permettre à d'autres supports de charge (2) de passer sous le support de charge (2) se trouvant dans la position relevée.

6. système de contrôle de sécurité selon la revendication 3, **caractérisé en ce que** le tampon (22) présente une multiplicité d'espaces tampons (22a - 22i), et une multiplicité de stations d'enlèvement (6a, 6b, 6c) est affectée au tampon (22), où il est prévu au moins deux fois plus d'espaces tampons que de stations d'enlèvement (6a, 6b, 6c).

7. Système de contrôle de sécurité selon la revendication 1, **caractérisé en ce que** le tampon (22) présente une multiplicité d'espaces tampons (22a - 22i), où chaque espace tampon (22a - 22i) est conçu en ayant une unité de convoyeur (28) qui peut être commandée séparément et qui sert à déplacer les supports de charge (2) dans la direction x.

8. système de contrôle de sécurité selon la revendication 4, **caractérisé en ce que** chaque station d'enlèvement (6a, 6b, 6c) présente une unité de déplacement (29) servant à déplacer les supports de charge (2) entre les stations d'enlèvement (6a, 6b, 6c) et l'unité de transfert (27).

9. système de contrôle de sécurité selon la revendication 1, **caractérisé en ce qu'**il est prévu, dans la zone d'enregistrement des bagages (1), un premier dispositif d'identification (10) servant à détecter un identifiant personnel de la personne, premier dispositif d'identification qui agit de façon conjointe avec un dispositif de traitement de données (11) servant à la liaison de l'identifiant personnel de la personne avec le support de charge (2) dans lequel se trouvent les bagages de la personne.

10. Système de contrôle de sécurité selon la revendication 9, **caractérisé en ce que** chaque station d'enlèvement (6a, 6b, 6c) est dotée d'un deuxième dispositif d'identification (20) servant à détecter l'identifiant personnel de la personne qui se trouve devant la station d'enlèvement (6a, 6b, 6c), où le deuxième dispositif d'identification (20) est lié au système de mise à disposition (21), afin de transférer le support de charge (2) lié à l'identifiant personnel de la personne jusqu'à cette station d'enlèvement (6a, 6b, 6c).

11. Système de contrôle de sécurité selon la revendication 10, **caractérisé en ce que** la zone de récupération des bagages (6) présente au moins une zone d'attente (34) pour des personnes qui veulent récupérer leurs bagages, où la pluralité de stations d'enlèvement (6a, 6b, 6c) est affectée à la zone d'attente (34), et il est prévu, dans la zone d'attente (34), au moins un troisième dispositif d'identification (36) qui détecte au moins l'identifiant personnel de la personne qui, en tant que personne suivante, peut aller jusqu'à l'une des stations d'enlèvement (6a, 6b, 6c), et où le troisième dispositif d'identification (36) agit de façon conjointe avec le système de mise à disposition (21) pour le transfert accéléré du support de charge (2) lié à l'identifiant personnel.

12. Système de contrôle de sécurité selon la revendication 9, **caractérisé en ce que** :
- entre la zone d'enregistrement des bagages (1) et la zone de récupération des bagages (6), il est prévu une station de contrôle des personnes (4),
- la zone de récupération des bagages (6) est conçue pour des bagages non contestés dans la station de contrôle des bagages (3),
- il est prévu une zone de contrôle de suivi (7) pour des bagages contestés dans la station de contrôle des bagages (3) et
- il est prévu, faisant suite à la station de contrôle des personnes, un dispositif d'informations (5) comprenant un autre dispositif d'identification servant à détecter l'identifiant personnel d'une personne qui se trouve devant le dispositif d'informations (5), où le dispositif d'informations (5) est conçu en outre pour fournir une indication, où l'indication fait savoir si les bagages sont mis à disposition dans la zone de récupération des bagages (6) ou dans la zone de contrôle de suivi (7).

13. Procédé de contrôle de sécurité, **caractérisé en ce qu'**un système de contrôle de sécurité selon la revendication 1 est utilisé, où :
- dans une zone d'enregistrement des bagages (1), une personne enregistre ses bagages dans au moins un support de charge (2),
- les bagages se trouvant dans le support de charge (2) sont soumis à un examen par imagerie dans une station de contrôle des bagages (3),
- le support de charge (2), avec les bagages, est transporté jusqu'à une zone de récupération des bagages (6) dotée d'au moins un tampon (22) pour une multiplicité de supports de charge (2), et ledit support de charge est introduit dans ledit tampon où plusieurs stations d'enlèvement (6a, 6b, 6c) sont affectées au tampon (22),
- le support de charge (2) chargé de bagages, qui provient du tampon (22), est mis à disposition pour le déchargement dans une station d'enlèvement (6a, 6b, 6c), et
- les supports de charge vidés (2) sont retransportés jusqu'à la zone d'enregistrement des bagages (1),
**caractérisé en ce que** - indépendamment de l'ordre dans lequel les supports de charge (2) ont été introduits dans le tampon (22) - chaque support de charge (2) chargé de bagages, qui se trouve dans le tampon (22), peut être transféré dans n'importe quel ordre jusqu'à chacune des stations d'enlèvement associées (6a, 6b, 6c).

14. Procédé de contrôle de sécurité selon la revendication 12, **caractérisé en ce que**, dans la zone d'enregistrement des bagages (1), un identifiant personnel de la personne est détecté au moyen d'un premier dispositif d'identification (10) et est lié au support de charge (2) dans lequel se trouvent les bagages de la personne.

15. Procédé de contrôle de sécurité selon la revendication 13, **caractérisé en ce que** l'identifiant personnel de la personne, qui se trouve devant l'une des stations d'enlèvement (6a, 6b, 6c), est détecté au moyen d'un deuxième dispositif d'identification (20), et le support de charge (2) lié à l'identifiant personnel de la personne est transféré depuis le tampon (22) jusqu'à cette station d'enlèvement (6a, 6b, 6c).
